# EUROPEAN PATENT SPECIFICATION

(11) **EP 3 216 374 B1**
(45) Date of publication and mention of the grant of the patent: **29.04.2020**
(21) Application number: 17160380.6
(22) Date of filing: 10.03.2017
(51) Int. Cl.: A47J 31/42, A47J 42/50, A47J 31/50

(54) **COFFEE MACHINE INCORPORATING A GRINDER**
KAFFEEMASCHINE MIT EINER MAHLVORRICHTUNG
MACHINE À CAFÉ COMPRENANT UN BROYEUR

(30) Priority: 11.03.2016 IT UA20161566
(43) Date of publication of application: 13.09.2017
(73) Proprietor: De'Longhi Appliances S.r.l., 31100 Treviso (IT)
(72) Inventor: DE' LONGHI, Giuseppe, 31100 Treviso (IT); ZARATIN, Enrico, 31038 Paese (Treviso) (IT); MARCATO, Emanuele, 31027 Spresiano (Treviso) (IT)
(74) Representative: Rapisardi, Mariacristina

(56) References cited:
- EP-A2- 1 867 258
- WO-A2-2014/162236
- US-A1- 2004 123 747
- US-A1- 2013 115 342

## Description

The present invention relates to a coffee machine equipped with a grinder. A grinder of the known type comprises a fixed burr and a rotating burr which delimit an adjustable gap, and a hopper having an opening for unloading the coffee beans into the gap where grinding of the coffee beans takes place.

Some known types of coffee machines equipped with a grinder provide the possibility of removing the hopper from the body of the coffee machine, for example in order to replace the type of coffee.

In these types of coffee machine, the hopper further comprises an occlusion element capable of closing off the unloading opening to prevent coffee beans from coming out when the hopper is extracted.

Sometimes a manual control lever is provided, which can be operated in one direction in order to lock the hopper in its housing seat in the body of the coffee machine and simultaneously bring the occlusion element into the position for opening the unloading opening, and in the opposite direction in order to unlock the hopper from its housing seat in the body of the coffee machine and simultaneously bring the occlusion element into the position for closing the unloading opening. One of the greatest drawbacks of coffee machines equipped with a grinder with an extractable hopper derives from the fact that following the extraction of the hopper, the access to the gap between the burrs of the grinder is uncovered.

This implies, on the one hand, a safety problem for persons, who could injure themselves if they accidentally introduce their fingers into the gap and, on the other hand, a problem of hygiene and cleanliness due to contamination of the gap and of the coffee beans present inside it by external agents. Us 2013/115342 A1 discloses a coffee machine according to the preamble of claim 1. WO 2014/162236 A,EP 1 867 258 A2 and US 2004/123747 A1 disclose further machines of the type.

The technical task of the present invention is thus to provide a coffee machine comprising a grinder with an extractable hopper that enables the aforementioned technical drawbacks of the prior art to be overcome.

Within the scope of this technical task, one object of the invention is to provide a coffee machine equipped with a grinder with an extractable hopper that is safe for the user in every configuration of use thereof.

A further object of the invention is to provide a coffee machine equipped with a grinder with an extractable hopper which assures that the necessary conditions of hygiene and cleanliness are maintained in every configuration of use thereof.

The technical task, as well as these and other objects are achieved, according to the present invention, by providing a coffee machine incorporating a grinder comprising a hopper that is extractably engageable in a housing seat, said hopper having an unloading opening and a first movable occlusion element for occluding said unloading opening, said housing seat having an access opening for access to burrs of the grinder and a second movable occlusion element for occluding said access opening, the coffee machine further comprising:
- a fastening means for releasably fastening the hopper in the housing seat, said fastening means being configured and arranged so as to automatically take on a fastening configuration by virtue of the engagement of the hopper in the housing seat;
- a first locking means, comprising a releasable locking element that is movable between a locking position and an unlocking position for locking/unlocking the fastening means in/from the fastening configuration;
- a first manually-operated control means mounted on said hopper, configured and arranged for the combined activation of said occlusion elements and said locking element, between a first configuration in which said occlusion elements are in the position for closing the respective openings and said locking element is in the unlocking position, and a second configuration in which said occlusion elements are in the position for opening the respective openings and said locking element is in the locking position;
- a second locking means for releasably locking the occlusion elements in the closed position, said second locking means being configured and arranged so as to automatically take on a locking configuration by virtue of the disengagement of the hopper from the housing seat;
- a second manually-operated control means that can be operated for releasing the fastening means selectively when said locking element and said occlusion elements take on said first configuration, said second control means being mounted on said hopper, and being separate and independent from the first control means,
characterized in that said first control means (12) comprises a translational manual control lever (23) to which said locking element (11) is rigidly connected, and an oscillating transmission lever (24) connecting said manual control lever (23) to said first occlusion element (6).

In a preferred embodiment of the invention said first and second occlusion elements have a means for connection to each other that is releasable by virtue of the disengagement of the hopper from the housing seat.

In a preferred embodiment of the invention, said second locking means comprises a first elastically yielding member supported by said second occlusion element and suitable for interacting, for unlocking purposes, with a corresponding interference member provided on the hopper.

In a preferred embodiment of the invention, said second locking means comprises a second elastically yielding member supported by the first control means and suitable for interacting, for unlocking purposes, with a corresponding interference member provided in the housing seat.

Additional features and advantages of the invention will become more apparent from the description of a preferred, but non-exclusive embodiment of the coffee machine comprising a grinder according to the invention, illustrated by way of non-limiting example in the appended drawings, in which:

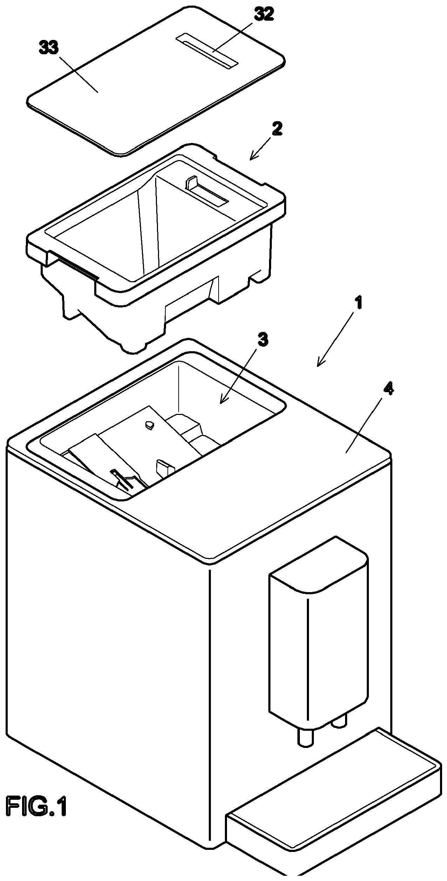

figure 1 shows the coffee machine with the hopper extracted from its positioning seat;

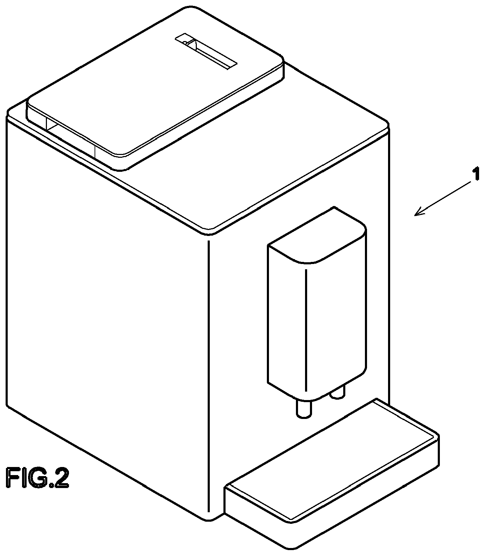

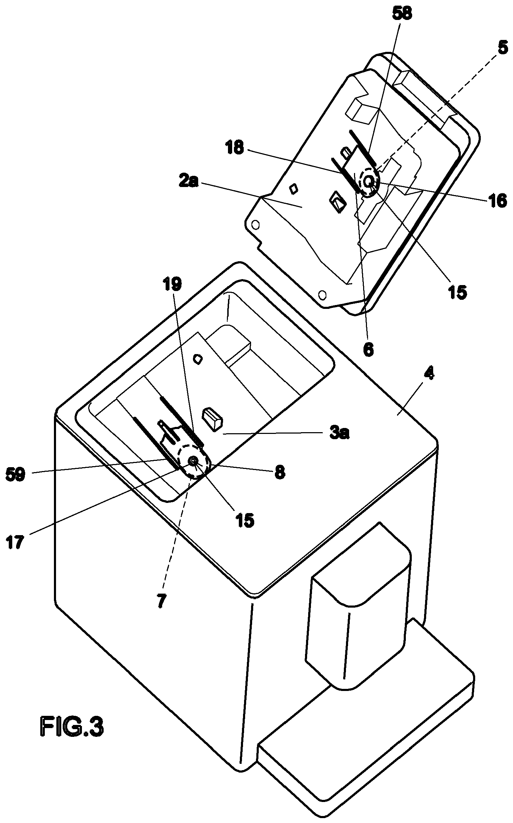

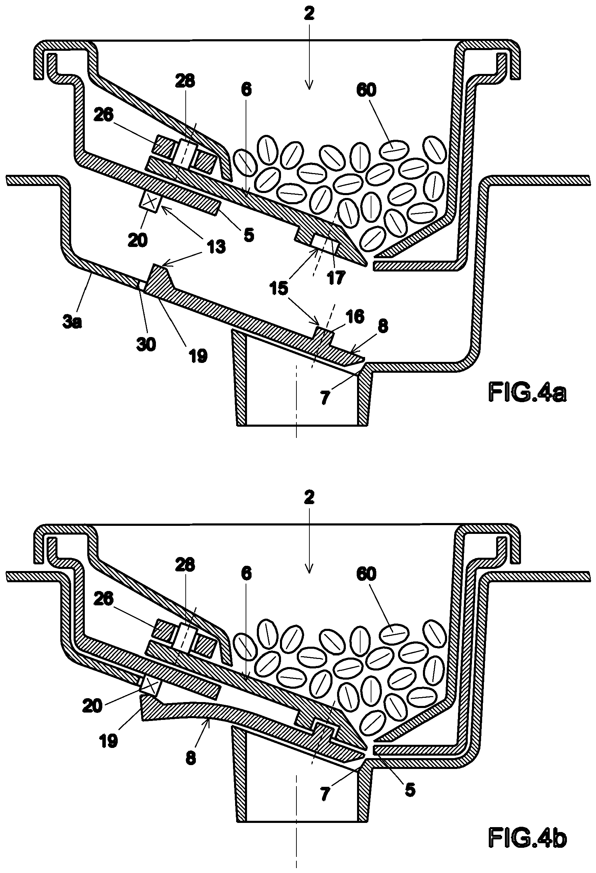

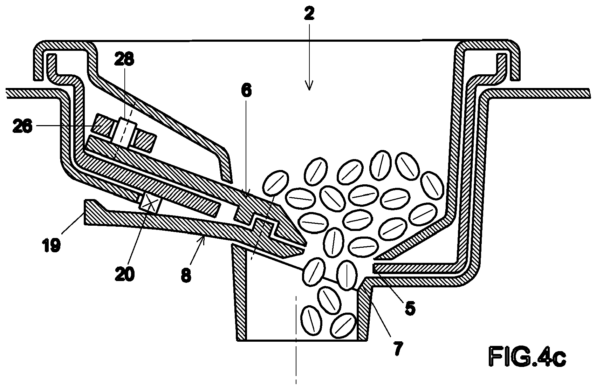

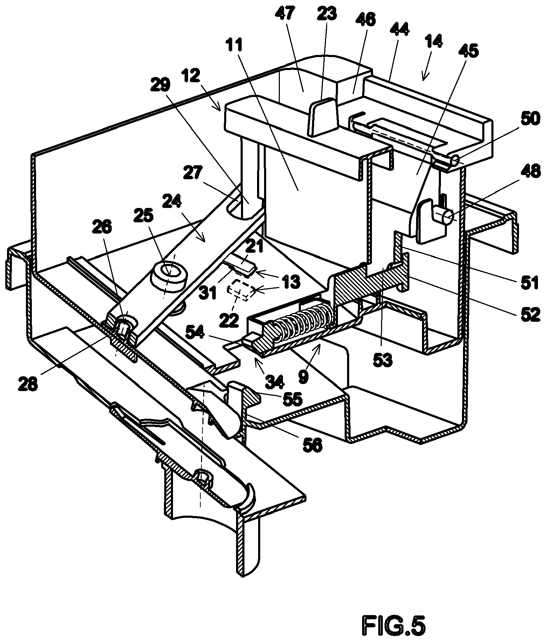

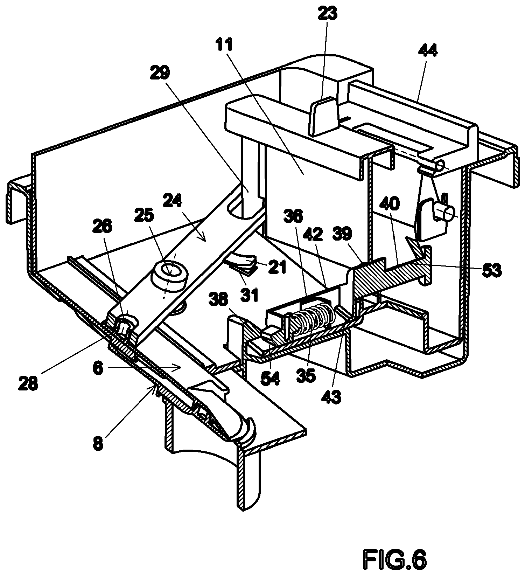

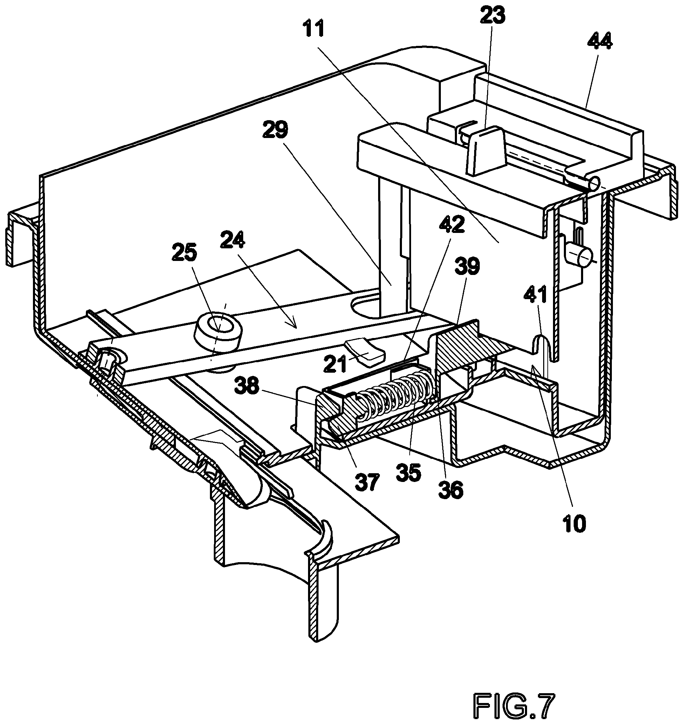

figure 2 shows the coffee machine with the hopper inserted in its housing seat; figure 3 shows the coffee machine with the hopper extracted, viewed from below; figures 4a, 4b and 4c schematically show, in sequence, the second occlusion element locked in the closed position, unlocked in the closed position and unlocked in the open position;
provided in the body 4 of the coffee machine 1.

The housing seat 3 has a shape mating that of the hopper 2.

The hopper 2, on a double inclined bottom wall 2a thereof, has an unloading opening 5 for unloading the coffee beans 60 by gravity toward the burrs and a first movable occlusion element 6 for occluding the unloading opening 5.

The housing seat 3 has an access opening 7 for access to burrs of the grinder and a second movable occlusion element 8 for occluding the access opening 7.

The coffee machine 1 has a fastening means 9 for releasably fastening the hopper 2 in the housing seat 3.

Advantageously, the fastening means 9 is configured and arranged so as to automatically take on a fastening configuration by virtue of the engagement of the hopper 2 in the housing seat 3.

The coffee machine 1 further comprises a first locking means 10, comprising a releasable locking element 11 that is movable between a locking position and an unlocking position for locking/unlocking the fastening means 9 in/from the fastening configuration.

The coffee machine 1 further comprises a first manually-operated control means 12 mounted on the hopper 2.

Advantageously, the first control means 12 is configured and arranged for the combined activation of the occlusion elements 6, 8 and the locking element 11, between a first configuration in which the occlusion elements 6, 8 are in the position for closing the respective openings 5, 7 and the locking element 11 is in the unlocking position, and a second configuration in which the occlusion elements 6, 8 are in the position for opening the respective openings 5, 7 and the locking element 11 is in the locking position.

The coffee machine 1 further comprises a second locking means 13 for releasably locking the occlusion elements 6, 8 in the closed position.

Advantageously, the second locking means 13 is configured and arranged so as to automatically take on a locking configuration by virtue of the disengagement of the hopper 2 from the housing seat 3.

The coffee machine 1 further comprises a second manually-operated control means 14 that can be operated for releasing the fastening means 9 selectively when the locking element 11 and the occlusion elements 6, 8 are in the first configuration. The second control means 14 is mounted on the hopper 2 and is separate and independent from the first control means 12.

The occlusion elements 6, 8 have a means 15 for connection to each other that is releasable by virtue of the disengagement of the hopper 2 from the housing seat 3. The connection means 15 comprises a pin 16 and a seat 17 of a shape mating that of the pin 16.

The first occlusion element 6 is translationally supported along linear guides 58 fashioned on the bottom wall 2a of the hopper 2.

The second occlusion element 8 is translationally supported along linear guides 59 fashioned on a bottom wall 3 a of the housing seat 3.

When the hopper 3 is housed in the housing seat 2, the first occlusion element 6 and the second occlusion element 8 are superimposed on each other and are slidable in the same translation direction.

In particular, the pin 16 is fashioned on the side of the second occlusion element 8 facing towards the first occlusion element 6, whilst the seat 17 thereof is fashioned on the side of the first occlusion element 6 facing towards the second occlusion element 8.

The second locking means 13 comprises a first elastically yielding member 19 supported by the second occlusion element 8 and suitable for interacting, for unlocking purposes, with a corresponding interference member 20 provided on the hopper 2.

The first elastically yielding member 19 is defined by a tab that extends in one piece from the second occlusion element 8.

In the released condition, the first elastically yielding member 19 interferes with an abutment 30 present on the bottom wall 3a of the housing seat 3.

The second locking means 13 likewise comprises a second elastically yielding member 21 supported by the first control means 12 and suitable for interacting, for unlocking purposes, with a corresponding interference member 22 provided in the housing seat 3.

The first control means 12 comprises a translational manual control lever 23 to which the locking element 11 is rigidly connected, and an oscillating transmission lever 24 connecting said manual control lever 23 to the first occlusion element 6. The control lever 23 is constrained to a translation guide fashioned on the hopper 2 and is arranged through an opening 32 of a removable cover 33 for closing the mouth of said hopper 2.

The transmission lever 24 has a hinge pin 25 for hinging to the outer side of the bottom wall 2a of the hopper 2, a first slot 26 positioned on one side of the hinge pin 25 and a second slot 27 positioned on the opposite side of the hinge pin 25 relative to the first slot 26.

A drawing pin 28 drawing the first occlusion element 6 in translation is slidably engaged in the first slot 26, whilst a drawing pin 29 drawing the oscillating lever 24 fixed to the control lever 23 in rotation is slidably engaged in the second slot 27.

The second elastically yielding member 21 is defined by a tab which extends in one piece from the transmission lever 24.

In the released condition, the second elastically yielding member 21 is locked in an engagement seat 31 present on the bottom wall 2a of the hopper 2.

The fastening means 9 comprises a slider 34 supported by the hopper 2, said slider 34 being movable in contrast to and by action of an elastic element 35.

The elastic element 35, for example a helical spring, is interposed between the slider 34 and a stop 36 fixed to the bottom wall 2a of the hopper 2.

The slider 34, made, in particular, from a single shaped longitudinal piece, has a first portion 37 configured and arranged for attachment with a hook 38 fixed in the housing seat 3, a second portion 39 configured and arranged for interaction with the locking element 11, and a third portion 40 for connection to the second control means 14.

The first portion 37 is fashioned at a front end of the slider 34, the third portion 40 is fashioned at a rear end of the slider 34, and the second portion 39 is fashioned in an intermediate and projecting position between the first portion 37 and the third portion 40.

A fourth portion 42 in the shape of a box for containing the elastic element 35 is interposed between the first portion 37 and the second portion 39.

The third portion 40 has a groove 53 and an enlarged terminal portion 52.

The fourth portion 42 has a window 43 through which the stop 36 extends.

The locking element 11 has an opening 41 that is positioned for unrestricted passage of the interaction portion 39 selectively when the locking element 11 is in the first configuration.

The second control means 14 comprises a translational manual control lever 44, and an oscillating transmission lever 45 connecting the manual control lever 44 to the third connection portion 40 of the slider 34.

The control lever 44 of the second control means 14 is constrained to a translation guide fashioned on the hopper 2 and is arranged through an opening 46 at the top of a lateral wall 47 of the hopper 2.

The control lever 44 of the second control means 14 and the control lever 23 of the first control means 12 have horizontal, mutually orthogonal directions of translation, that is to say, they lie in a plane parallel to the rest surface of the coffee machine 1.

The transmission lever 45, in particular, has a first hinge pin 48 for hinging to the hopper 2, a second hinge pin 50 for hinging to the control lever 44 positioned on one side of the first hinge pin 48 and oriented parallel to the latter, and a drawing portion 51 for drawing the slider 34 positioned on the opposite side of the first hinge pin 48 relative to the second hinge pin 50.

The drawing portion 51 is freely engaged in the groove 53 of the third portion 40 and interferes with the enlarged terminal portion 52 of the third portion 40.

The system for extracting the hopper 2 functions in the following manner.

Let us start off from the assumption that the hopper 2 is initially fixed in the housing seat 3 with the first control means in their first configuration corresponding to the placement of the occlusion elements 6, 8 in the closed position and the locking element 11 in the unlocked position, in which the opening 41 is positioned for unrestricted passage of the interaction portion 39 of the slider 34, and with the control lever 44 of the second control means in the released position, in which the elastic element 35 exerts a pushing force which maintains the slider 34 extended with the first portion 37 in the position of attachment to the hook 38.

In this situation, the first elastically yielding member 19 is subjected to an elastic bending by the interference member 20 with which it is engaged. In this condition of deformation, the first elastically yielding member 19 is disengaged from the abutment 30.

At the same time, the second elastically yielding member 21 is subjected to an elastic bending by the interference member 22 with which it is engaged. In this condition of deformation, the second elastically yielding member 21 is disengaged from the abutment 31.

Thus there is no active locking which prevents the manual operation of the first control means 12, which can therefore be manually operated so as to take on its second configuration, in which the occlusion elements 6, 8 are placed in the open position and the locking element 11 is placed in the locking position in which the opening 41 is offset from the slider 34. In this new situation, the locking element 11 intercepts the slider 34, preventing the retraction thereof and the consequent detachment of the first portion 37 of the slider 34 from the hook 38. Consequently, the control lever 44 of the second control means 14, even if the user attempted to press on it, would be locked in the released position.

In order to extract the hopper 2 from the housing seat 3, it is necessary to operate in the following manner.

The user must first manually operate the first control means 12 in order to bring it into the first configuration thereof.

Corresponding to this action is the unlocking of the second control means 14, which can now be operated by the user.

At this point, the user applies a pushing force on the control lever 44, which is necessary to overcome the elastic force exerted by the elastic element 35 on the slider 34, so that the slider 34 is drawn back in retraction by the transmission lever 45 of the second control means 14, by virtue of the interference of the enlarged terminal portion 52 of the third portion 40 of the slider 34 with the drawing portion 51 of the transmission lever 45 of the second control means 14, until complete disengagement of the first portion 37 of the slider 34 from the hook 38.

The user, always keeping the control lever 44 of the second control means 14 pressed, extracts the hopper 2 from the housing seat 3.

By virtue of the extraction of the hopper 2, the first elastically yielding member 19 is disengaged from the interference member 20, restoring the initial rest configuration, in which it is again constrained to the abutment 30. In this situation the occlusion element 8 remains advantageously locked in the position for closing the access opening to the burrs of the grinder. Preventing access to the burrs of the grinder when the hopper 2 is absent from the positioning seat 3 considerably increases the safety of use of the coffee machine 1.

At the same time, by virtue of the extraction of the hopper 2, the second elastically yielding member 21 is disengaged from the interference member 22, restoring the initial rest configuration, in which it is again constrained to the abutment 31. In this situation, the first manual control means 12 remains locked and therefore the occlusion element 6 also remains advantageously locked in the position for closing the unloading opening 5 of the coffee beans. The user can in complete tranquillity handle the hopper 2 in order to clean it, refill it or replace the coffee beans with others of a different kind without risking an undesired leakage of product from the unloading opening.

The subsequent fastening of the hopper 2 in the positioning seat 3 takes place in a completely automatic manner as a consequence of the mere penetration of the hopper 2 in the housing seat 3. The first portion 37 of the slider 34, in fact, has an inclined surface 54, which, during an initial phase of downward penetration of the hopper 2 into the housing seat 3, interferes with a head 55 of the hook 38, which exerts a force of retraction of the slider 34 prevailing over the elastic force exerted in the opposite direction by the elastic element 35. In this regard, the return element 35 can be set in such a way that the weight of the hopper 2 is sufficient on its own to induce the retraction of the slider 34. When the inclined surface 54 is then disengaged from the head 55 of the hook 38 by virtue of a further phase of downward penetration of the hopper 2 into the housing seat 3, the retraction force ceases and the elastic force exerted by the elastic element 35, no longer opposed, will bring the slider 34 back into the initial position, in which the first portion 37 engages in a recess 56 of the hook 38 positioned below the head 55 of the hook 38.

## Claims

1. A coffee machine (1) incorporating a grinder comprising a hopper (2) that is extractably engageable in a housing seat (3), said hopper (2) having an unloading opening (5) and a first movable occlusion element (6) for occluding said unloading opening (5), said housing seat (3) having an access opening (7) for access to burrs of the grinder and a second movable occlusion element (8) for occluding said access opening (7), the coffee machine (1) further comprising:
- a fastening means (9) for releasably fastening the hopper (2) in the housing seat (3), said fastening means (9) being configured and arranged so as to automatically take on a fastening configuration by virtue of the engagement of the hopper (2) in the housing seat (3);
- a first locking means (10), comprising a releasable locking element (11) that is movable between a locking position and an unlocking position for locking/unlocking the fastening means (9) in/from the fastening configuration;
- a first manually-operated control means (12) mounted on said hopper (2), said means (12) being configured and arranged for the combined activation of said occlusion elements (6, 8) and said locking element (11), between a first configuration in which said occlusion elements (6, 8) are in the position for closing the respective openings (5, 7) and said locking element (11) is in the unlocking position, and a second configuration in which said occlusion elements (6, 8) are in the position for opening the respective openings (5, 7) and said locking element (11) is in the locking position;
- a second locking means (13) for releasably locking the occlusion elements (6, 8) in the closed position, said second locking means (13) being configured and arranged so as to automatically take on a locking configuration by virtue of disengagement of the hopper (3) from the housing seat (3);
- a second manually-operated control means (14) that can be operated for releasing the fastening means (9) selectively when said locking element (11) and said occlusion elements (6, 8) take on said first configuration, said second control means (14) being mounted on said hopper (2), and being separate and independent from the first control means (12),
**characterized in that** said first control means (12) comprises a translational manual control lever (23) to which said locking element (11) is rigidly connected, and an oscillating transmission lever (24) connecting said manual control lever (23) to said first occlusion element (6).

2. A coffee machine (1) according to claim 1, **characterized in that** said first and second occlusion elements (6, 8) have a means (16, 17) for connection to each other that is releasable by virtue of the disengagement of the hopper (2) from the housing seat (3).

3. The coffee machine (1) according to any one of the preceding claims, **characterized in that** said second locking means (13) comprises a first elastically yielding member (19) supported by said second occlusion element (8) and that is suitable for interacting, for unlocking purposes, with a corresponding interference member (20) provided on the hopper (2).

4. The coffee machine (1) according to the preceding claim, **characterized in that** said second locking mean (13) comprises a second elastically yielding member (21) supported by the first control means (12) and that is suitable for interacting, for unlocking purposes, with a corresponding interference member (22) provided in the housing seat (3).

5. The coffee machine (1) according to claim 1, **characterized in that** said occlusion elements (6, 8) are constrained to move in a parallel manner along translational movement guides (58, 59), said transmission lever (24) and said first occlusion element (6) being connected by means of a pin (28) that is slidable in a slot (26) so as to convert a rotation of the transmission lever (24) in a translational movement of said occlusion elements (6, 8).

6. The coffee machine (1) according to claim 1 or 5 , **characterized in that** said transmission lever (24) is mounted on an inclined bottom wall (2a) of said hopper (2).

7. The coffee machine (1) according to claim 1, **characterized in that** said control lever (23) is arranged through an opening (32) of a removable cover (33) for closing the mouth of said hopper (2).

8. The coffee machine (1) according to any one of the preceding claims, **characterized in that** said fastening means (9) comprises a slider (34) supported by the hopper (2), said slider (34) being movable in contrast to and by action of an elastic element (35) and having a first portion (37) configured and arranged for attachment with a hook (38) provided in the housing seat (3), a second portion (39) configured and arranged for interaction with said locking element (11), and a third portion (40) for connection to said second control means (14).

9. The coffee machine (1) according to the preceding claim, **characterized in that** said locking element (11) has an opening (51) that is positioned for unrestricted passage of the interaction portion (39) selectively when said locking element (11) is found in said first configuration.

10. The coffee machine (1) according to claim 8 or 9 , **characterized in that** said second control means (14) comprises a translational manual control lever (44), and an oscillating transmission lever (45) connecting said manual control lever (44) of said second control means (14) to said third connection portion (40).

11. The coffee machine (1) according to claim 10, **characterized in that** said control lever (44) of said second control means (14) is arranged through an opening (46) at the top of a lateral wall (47) of said hopper (2).

## Patentansprüche

1. Kaffeemaschine (1) mit einer Mahlvorrichtung, umfassend einen Trichter (2), der herausnehmbar in einem Aufnahmesitz (3) in Eingriff gelangen kann, wobei der Trichter (2) eine Entladeöffnung (5) und ein erstes bewegbares Verschlusselement (6) aufweist, um die Entladeöffnung (5) zu verschließen, wobei der Aufnahmesitz (3) eine Zugangsöffnung (7) für den Zugang zu Graten der Mahlvorrichtung und ein zweites bewegbares Verschlusselement (8) zum Verschließen der Zugangsöffnung (7) aufweist, wobei die Kaffeemaschine (1) zudem Folgendes umfasst:
- Befestigungsmittel (9) zum lösbaren Befestigen des Trichters (2) im Aufnahmesitz (3), wobei die Befestigungsmittel (9) so ausgelegt und angeordnet sind, dass sie durch den Eingriff des Trichters (2) im Aufnahmesitz (3) automatisch eine Befestigungskonfiguration einnehmen;
- erste Verriegelungsmittel (10), umfassend ein lösbares Verriegelungselement (11), das zwischen einer Verriegelungsposition und einer Entriegelungsposition bewegbar ist, um die Befestigungsmittel (9) in der Befestigungskonfiguration zu verriegeln/aus dieser Konfiguration zu lösen;
- erste manuell betätigte Bedienmittel (12), die am Trichter (2) montiert sind, wobei die Mittel (12) ausgelegt und angeordnet sind, um die Verschlusselemente (6, 8) und das Verriegelungselement (11) kombiniert zwischen einer ersten Konfiguration, in der sich die Verschlusselemente (6, 8) in der Position zum Verschließen der jeweiligen Öffnungen (5, 7) befinden und sich das Verriegelungselement (11) in der Entriegelungsposition befindet, und einer zweiten Konfiguration, in der sich die Verschlusselemente (6, 8) in der Position zum Öffnen der jeweiligen Öffnungen (5, 7) befinden und sich das Verriegelungselement (11) in der Verriegelungsposition befindet, zu aktivieren;
- zweite Verriegelungsmittel (13) zum lösbaren Verriegeln der Verschlusselemente (6, 8) in der geschlossenen Position, wobei die zweiten Verschlusselemente (13) so ausgelegt und angeordnet sind, dass sie durch das Lösen des Trichters (3) aus dem Aufnahmesitz (3) automatisch eine Verriegelungskonfiguration einnehmen;
- zweite manuell betätigte Bedienmittel (14), die bedient werden können, um die Befestigungsmittel (9) selektiv zu lösen, wenn das Verriegelungselement (11) und die Verschlusselemente (6, 8) die erste Konfiguration einnehmen, wobei die zweiten Bedienmittel (14) am Trichter (2) montiert und separat und unabhängig von den ersten Bedienmitteln (12) sind,
**dadurch gekennzeichnet, dass** die ersten Bedienmittel (12) einen manuellen Verschiebebedienhebel (23) umfassen, mit dem das Verriegelungselement (11) steif verbunden ist, und einen Schwenkübertragungshebel (24), der den manuellen Bedienhebel (23) mit dem ersten Verschlusselement (6) verbindet.

2. Kaffeemaschine (1) nach Anspruch 1, **dadurch gekennzeichnet, dass** das erste und das zweite Verschlusselement (6, 8) Mittel (16, 17) aufweisen, um miteinander verbunden zu werden, die durch das Lösen des Trichters (2) aus dem Aufnahmesitz (3) lösbar sind.

3. Kaffeemaschine (1) nach einem der vorhergehenden Ansprüche, **dadurch gekennzeichnet, dass** die zweiten Verriegelungsmittel (13) ein erstes elastisch nachgebendes Element (19) umfassen, das vom zweiten Verschlusselement (8) getragen wird und geeignet ist, um zum Entriegeln mit einem entsprechenden Interferenzelement (20), das am Trichter (2) bereitgestellt ist, zu interagieren.

4. Kaffeemaschine (1) nach dem vorhergehenden Anspruch, **dadurch gekennzeichnet, dass** die zweiten Verriegelungsmittel (13) ein zweites elastisch nachgebendes Element (21) umfassen, das von den ersten Bedienmitteln (12) getragen wird und geeignet ist, um zum Entriegeln mit einem entsprechenden Interferenzelement (22), das im Aufnahmesitz (3) bereitgestellt ist, zu interagieren.

5. Kaffeemaschine (1) nach Anspruch 1, **dadurch gekennzeichnet, dass** die Verschlusselemente (6, 8) gezwungen sind, sich parallel entlang Verschiebebewegungsführungen (58, 59) zu bewegen, wobei der Übertragungshebel (24) und das erste Verschlusselement (6) mittels eines Stifts (28) verbunden sind, der in einer Aussparung (26) verschiebbar ist, sodass eine Drehung des Übertragungshebels (24) in eine translatorische Bewegung der Verschlusselemente (6, 8) umgewandelt wird.

6. Kaffeemaschine (1) nach Anspruch 1 oder 5, **dadurch gekennzeichnet, dass** der Übertragungshebel (24) an einer geneigten Bodenwand (2a) des Trichters (2) montiert ist.

7. Kaffeemaschine (1) nach Anspruch 1, **dadurch gekennzeichnet, dass** der Bedienhebel (23) durch eine Öffnung (32) einer abnehmbaren Abdeckung (33) zum Verschließen der Eingangsöffnung des Trichters (2) angeordnet ist.

8. Kaffeemaschine (1) nach einem der vorhergehenden Ansprüche, **dadurch gekennzeichnet, dass** die Befestigungsmittel (9) einen Schieber (34) umfassen, der vom Trichter (2) getragen wird, wobei der Schieber (34) einem elastischen Element (35) entgegenwirkend und durch dessen Wirkung bewegbar ist und einen ersten Abschnitt (37) aufweist, der ausgelegt und angeordnet ist, um mit einem Haken (38) angebracht zu werden, der im Aufnahmesitz (3) bereitgestellt ist, wobei ein zweiter Abschnitt (39) ausgelegt und angeordnet ist, um mit dem Verriegelungselement (11) zu interagieren, und ein dritter Abschnitt (40), um mit den zweiten Bedienmitteln (14) verbunden zu werden.

9. Kaffeemaschine (1) nach dem vorhergehenden Anspruch, **dadurch gekennzeichnet, dass** das Verriegelungselement (11) eine Öffnung (51) aufweist, die selektiv für den ungehinderten Durchgang des Interaktionsabschnitts (39) positioniert ist, wenn sich das Verriegelungselement (11) in der ersten Konfiguration befindet.

10. Kaffeemaschine (1) nach Anspruch 8 oder 9, **dadurch gekennzeichnet, dass** die zweiten Bedienmittel (14) einen manuellen Verschiebebedienhebel (44) und einen Schwenkübertragungshebel (45) umfassen, der den manuellen Bedienhebel (44) der zweiten Bedienmittel (14) mit dem dritten Verbindungsabschnitt (40) verbindet.

11. Kaffeemaschine (1) nach Anspruch 10, **dadurch gekennzeichnet, dass** der Bedienhebel (44) der zweiten Bedienmittel (14) durch eine Öffnung (46) an der Oberseite einer Seitenwand (47) des Trichters (2) angeordnet ist.

## Revendications

1. Machine à café (1) incorporant un broyeur comprenant une trémie (2) pouvant se mettre en prise de manière extractible dans un siège de logement (3), ladite trémie (2) comportant une ouverture de déchargement (5) et un premier élément de fermeture (6) mobile pour fermer ladite ouverture de déchargement (5), ledit siège de logement (3) comportant une ouverture d'accès (7) pour accéder aux bavures du broyeur et un second élément de fermeture (8) mobile pour fermer ladite ouverture d'accès (7), dans laquelle la machine à café (1) comprend de plus :
- un moyen de fixation (9) pour fixer de façon détachable la trémie (2) dans le siège de logement (3), ledit moyen de fixation (9) étant configuré et disposé de manière à adopter automatiquement une configuration de fixation en vertu de l'engagement de la trémie (2) dans le siège de logement (3) ;
- un premier moyen de blocage (10), comprenant un élément de blocage (11) détachable étant mobile entre une position de blocage et une position de déblocage pour bloquer/débloquer le moyen de fixation (9) dans/de la configuration de fixation ;
- un premier moyen de commande (12) actionné manuellement monté sur ladite trémie (2), ledit moyen (12) étant configuré et disposé pour l'activation combinée desdits éléments de fermeture (6, 8) et dudit élément de blocage (11), entre une première configuration dans laquelle lesdits éléments de fermeture (6, 8) sont dans la position de fermeture des ouvertures (5, 7) respectives et ledit élément de blocage (11) est dans la position de déblocage, et une seconde configuration dans laquelle lesdits éléments de fermeture (6, 8) sont dans la position d'ouverture des ouvertures (5, 7) respectives et ledit élément de blocage (11) est dans la position de blocage ;
- un second moyen de blocage (13) pour bloquer de façon détachable les éléments de fermeture (6, 8) dans la position de fermeture, ledit second moyen de blocage (13) étant configuré et disposé de manière à adopter automatiquement une configuration de blocage en vertu du désengagement de la trémie (3) du siège de logement (3) ;
- un second moyen de commande (14) actionné manuellement pouvant être actionné pour détacher le moyen de fixation (9) sélectivement lorsque ledit moyen de blocage (11) et lesdits éléments de fermeture (6, 8) adoptent ladite première configuration, ledit second moyen de commande (14) étant monté sur ladite trémie (2) et étant séparé et indépendant du premier moyen de commande (12),
**caractérisée en ce que** ledit premier moyen de commande (12) comprend un levier translationnel (23) de commande manuelle auquel ledit élément de blocage (11) est raccordé rigidement, et un levier de transmission (24) oscillant reliant ledit levier de commande (23) manuelle au dit premier élément de fermeture (6).

2. Machine à café (1) selon la revendication 1, **caractérisée en ce que** lesdits premier et second éléments de fermeture (6, 8) comportent un moyen (16, 17) pour un raccordement réciproque que est détachable en vertu du désengagement de la trémie (2) du siège de logement (3).

3. Machine à café (1) selon l'une quelconque des revendications précédentes, **caractérisée en ce que** ledit second moyen de blocage (13) comprend un premier organe (19) pouvant se déformer élastiquement par ledit second élément de fermeture (8) et étant adapté pour interagir, aux fins de déblocage, avec un organe d'interférence (20) correspondant prévu sur la trémie (2).

4. Machine à café (1) selon la revendication précédente, **caractérisée en ce que** ledit second moyen de blocage (13) comprend un second organe (21) pouvant se déformer élastiquement supporté par le premier moyen de commande (12) et étant adapté pour interagir, aux fins de déblocage, avec un organe d'interférence (22) correspondant prévu dans le siège de logement (3).

5. Machine à café (1) selon la revendication 1, **caractérisée en ce que** lesdits éléments de fermeture (6, 8) sont contraints de se déplacer d'une façon parallèle le long de guides de déplacement (58, 59) translationnels, ledit levier de transmission (24) et ledit premier élément de fermeture (6) étant raccordés au moyen d'une cheville (28) pouvant coulisser dans une fente (26) de sorte à convertir une rotation du levier de transmission (24) dans un mouvement translationnel desdits éléments de fermeture (6, 8).

6. Machine à café (1) selon la revendication 1 ou 5, **caractérisée en ce que** ledit levier de transmission (24) est monté sur une cloison de fond (2a) inclinée de ladite trémie (2).

7. Machine à café (1) selon la revendication 1, **caractérisée en ce que** ledit levier de commande (23) est disposé à travers une ouverture (32) d'un couvercle amovible (33) pour fermer l'embouchure de ladite trémie (2).

8. Machine à café (1) selon l'une quelconque des revendications précédentes, **caractérisée en ce que** ledit moyen de fixation (9) comprend un coulisseau (34) supporté par la trémie (2), ledit coulisseau (34) étant mobile en opposition à, et par l'action d'un élément élastique (35) et comportant une première portion (37) configurée et disposée pour l'accrochage à un crochet (38) prévu dans le siège de logement (3), une seconde portion (39) configurée et disposée pour l'interaction avec ledit élément de blocage (11), et une troisième portion (40) pour le raccordement au dit second moyen de commande (14).

9. Machine à café (1) selon la revendication précédente, **caractérisée en ce que** ledit élément de blocage (11) comporte une ouverture (51) étant positionnée pour le passage sans restriction de la portion d'interaction (39) sélectivement lorsque ledit élément de blocage (11) se trouve dans ladite première configuration.

10. Machine à café (1) selon la revendication 8 ou 9, **caractérisée en ce que** ledit second moyen de commande (14) comprend un levier translationnel (44) de commande manuelle et un levier de transmission (45) oscillant reliant ledit levier de commande (44) manuelle dudit second moyen de commande (14) à ladite troisième portion de raccordement (40).

11. Machine à café (1) selon la revendication 10, **caractérisée en ce que** ledit levier de commande (44) dudit second moyen de commande (14) est disposé à travers une ouverture (46) au sommet d'une cloison latérale (47) de ladite trémie (2).
